(19) Europäisches Patentamt
European Patent Office
Office européen des brevets

(11) EP 1 270 944 A2

(12) **EUROPEAN PATENT APPLICATION**

(43) Date of publication:
02.01.2003 Bulletin 2003/01

(51) Int Cl.⁷: **F04B 27/18**

(21) Application number: 02014348.3

(22) Date of filing: 27.06.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 29.06.2001 JP 2001199482

(71) Applicant: **Kabushiki Kaisha Toyota Jidoshokki**
**Kariya-shi, Aichi-ken (JP)**

(72) Inventors:
• **Sonobe, Masanori**
**Kariya-shi, Aichi-ken (JP)**
• **Odachi, Yasuharu**
**Kariya-shi, Aichi-ken (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Displacement controller of variable displacement compressor**

(57) A controller for controlling the displacement of a variable displacement compressor (CP) that does not require an engine ECU to presume the load torque of the compressor and thus does not require the preparation of a load torque presumption map for each type of vehicle. The displacement controller includes a control valve (CV) arranged in the compressor to vary the displacement of the compressor in accordance with an instruction signal. A first computer (67) is connected to the control valve. The first computer provides the instruction signal to the control valve to adjust a torque (Tr) of the compressor to a target torque that is in accordance with a torque target signal (Trs).

# Fig.3

EP 1 270 944 A2

**Description**

The present invention relates to a displacement controller of a variable displacement compressor in a vehicle air conditioner.

A refrigerant circuit (refrigerating cycle) of a typical vehicle air conditioner includes a condenser, an expansion valve, an evaporator, and a compressor.

A variable displacement compressor, which is installed in vehicles, includes a displacement control mechanism. The displacement control mechanism functions to maintain the pressure at the outlet of the evaporator (or the correlated suction pressure of the compressor) at a predetermined target value (target pressure). Further, the displacement control mechanism uses the outlet pressure of the evaporator (or the correlated suction pressure) as a control index to feedback control the displacement of the compressor, or the angle of a swash plate that is incorporated in the compressor. This adjusts the amount of refrigerant discharged from the compressor in accordance with the cooling load. The compressor is controlled by an air conditioner ECU.

A typical displacement control mechanism includes a displacement control valve, which is referred to as an internal control valve. The internal control valve detects the outlet pressure of the evaporator or the suction pressure with a pressure sensing member, such as a bellows or a diaphragm. The movement of the pressure sensing member is used to position a valve body and adjust the opening amount of the valve. This adjusts the pressure of a crank chamber, which accommodates the swash plate, and determines the angle of the swash plate.

The target pressure of the internal control valve is constant. This hinders complicated displacement control that may be performed to reduce power consumption. Accordingly, Japanese Laid-Open Patent Publication No. 10-278567 describes a further type of displacement control mechanism that includes an external control valve, which is controlled by electric signals sent from an external device.

A vehicle compressor is normally driven by the power transmitted from the engine. The compressor is one of the devices that consume a large amount of the engine power. Thus, a vehicle air conditioner is programmed so that it temporarily minimizes the compressor displacement to reduce the load applied to the engine when power must be directed to driving the vehicle, such as when accelerating the vehicle or when climbing a slope. In such a case, in the compressor, which incorporates the external control valve, the opening amount of the control valve is adjusted to minimize the displacement of the compressor and decrease the load of the compressor that is applied to the engine.

However, the power consumed by the compressor (i.e., the load torque produced by the compressor) may differ by two times or greater depending on conditions such as the suction pressure and the discharge pressure of the compressor even if the displacement is the same (especially, when the displacement is 100%, or maximum). Accordingly, to prevent the engine from stalling when the load torque of the compressor increases due to certain conditions, a drive shaft of the compressor must constantly be driven at a speed that is greater than a predetermined value. This increases power consumption. To decrease power consumption, an engine ECU, which controls the engine, makes a presumption of the load torque of the compressor based on the operating state of the compressor. The load torque, or the torque required to drive the compressor, is then added to the torque required to drive the vehicle. Subsequently, the engine ECU controls the engine so that the sum of the torques is equalized with the output torque of the engine.

The engine ECU performs the presumption of the compressor load toque based on a map, which is obtained through experiments. However, the load torque of the compressor differs in accordance with the structure of an external refrigerant circuit, which is connected to the compressor. Since the torque presumption map differs between different air conditioning systems, the generation of the map is burdensome. Further, since the load torque of the compressor must constantly be fed back for efficient power consumption, the controlling of the engine is complicated.

It is an object of the present invention to provide a controller for controlling the displacement of a variable displacement compressor that does not require an engine ECU to presume the load torque of the compressor and thus does not require the preparation of a load torque presumption map for each type of vehicle.

To achieve the above object, the present invention provides a displacement controller for controlling displacement of a variable displacement compressor. The compressor includes a drive shaft, which is provided with power from a drive source, and a variable displacement mechanism. The drive shaft is rotated to perform suction, compression, and discharge of gas. The displacement controller includes a control valve arranged in the compressor to vary the displacement of the compressor in accordance with an instruction signal. A first computer is connected to the control valve. The first computer provides the instruction signal to the control valve to adjust a torque of the compressor to a target torque that is in accordance with a torque target signal.

A further perspective of the present invention is a vehicle air conditioner having a variable displacement compressor including a drive shaft, which is provided with power from a drive source, and a variable displacement mechanism. The drive shaft is rotated to perform suction, compression, and discharge of gas. A displacement controller controls displacement of the compressor. The displacement controller includes a control valve arranged in the compressor to vary the displacement of the compressor in accordance with an instruction signal. A first computer is connected to the control valve. The first computer provides the instruction signal to the control valve to adjust a torque of the compressor to a target torque that is in accordance with a torque target signal.

A further perspective of the present invention is a connector selectively connected to a signal line, which provides the torque target signal, for adjusting a torque of a variable displacement compressor. The compressor includes a control valve to vary the displacement of the compressor in accordance with an instruction signal. The connector includes a first computer for providing the instruction signal to the control valve to adjust the torque of the compressor to a target torque that is in accordance with a torque target signal.

A further perspective of the present invention is a variable displacement control system for controlling a variable displacement compressor including a drive shaft, which is provided with power from a drive source, and a variable displacement mechanism. The drive shaft is rotated to perform suction, compression, and discharge of gas. The system includes a control valve arranged in the compressor to vary the displacement of the compressor in accordance with an instruction signal, and a first computer connected to the control valve. The first computer provides the instruction signal to the control valve to adjust a torque of the compressor to a target torque, which is in accordance with a torque target signal. The system also includes a second computer for generating the target torque signal representing the target torque of the compressor.

Other aspects and advantages of the present invention will become apparent from the following description, taken in conjunction with the accompanying drawings, illustrating by way of example the principles of the invention.

The invention and preferred objects and advantages thereof, may best be understood by reference to the following description of the certain exemplifying embodiments together with the accompanying drawings in which:

Fig. 1 is a cross-sectional view showing a variable displacement compressor according to a first embodiment of the present invention;
Fig. 2 is a cross-sectional view showing a control valve of the compressor of Fig. 1;
Fig. 3 is a block diagram of a control system;
Fig. 4 is a schematic diagram showing a connector incorporating a compressor ECU;
Fig. 5 is a flowchart illustrating a main routine of an air conditioning control program; and
Fig. 6 is a block diagram illustrating a second embodiment according to the present invention.

A controller for controlling the displacement of a variable displacement swash type compressor, which is used in an automobile air conditioner, according to a first embodiment and a second embodiment of the present invention will now be discussed. To avoid redundancy, like or same reference numerals are given to those components that are the same or similar in all embodiments.

First Embodiment

[Compressor]

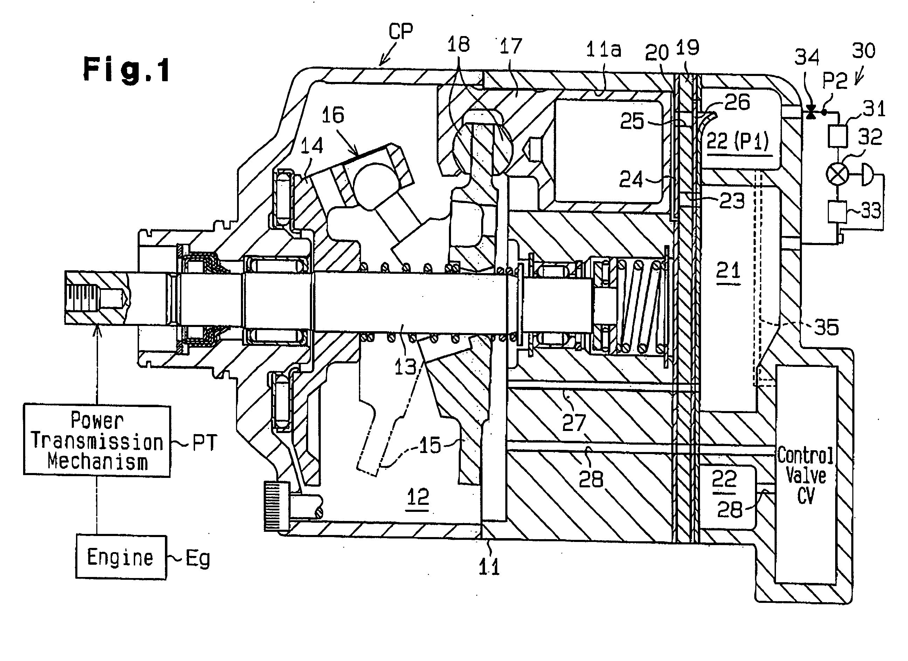

Referring to Fig. 1, a variable displacement swash type compressor CP has a housing 11. A crank chamber (control chamber) 12 is defined in the housing 11. A drive shaft 13 is rotatably arranged in the crank chamber 12. The drive shaft 13, which is connected to an engine Eg by a power transmission mechanism PT, is rotated by the power transmitted from an engine Eg.

The power transmission mechanism PT may be a clutch mechanism (e.g., electromagnetic clutch) that selectively connects and disconnects the compressor CP and the engine Eg in accordance with electric control performed by an external device. Alternatively, the power transmission mechanism PT may be a clutchless mechanism (e.g., a combination of a belt and pulley) in which power is constantly transmitted to the compressor CP. In the preferred embodiment, the power transmission mechanism PT is clutchless.

A lug plate 14 is fixed to the drive shaft 13 in the crank chamber 12 and rotated integrally with the drive shaft 13. A swash plate 15 is accommodated in the crank chamber 12. The swash plate 15 is supported so that it inclines as it moves along the drive shaft 13. A hinge mechanism 16 is arranged between the lug plate 14 and the swash plate 15. The hinge mechanism 16 enables the swash plate 15 to incline relative to the drive shaft 13 while rotating integrally with the lug plate 14 and the drive shaft 13. The lug plate 14, the swash plate 15, and the hinge mechanism 16 define a variable displacement mechanism.

A plurality of cylinder bores 11a (only one shown in Fig. 1) are formed in the housing 11. A piston 17 is reciprocated in each cylinder bore 11a. Each piston 17 is engaged with the peripheral portion of the swash plate 15 by a pair of shoes 18. As the drive shaft 13 rotates, the shoes 18 convert the rotating motion of the swash plate 15 to the reciprocating motion of the piston 17.

A valve plate 19 is arranged at the rear (toward the right as viewed in Fig. 1) of the cylinder bores 11a. A compression chamber 20 is defined in each cylinder bore 11a between the associated piston 17 and the valve plate 19. A suction chamber 21 and a discharge chamber 22 are defined in the rear portion of the housing 11.

As each piston 17 moves from its top dead center position to its bottom dead center position, refrigerant gas is drawn from the suction chamber 21 into the associated compression chamber 20 through a suction port 23 and a suction valve 24, which are formed in the valve plate 19. The refrigerant gas drawn into the compression chamber 20 is compressed to a predetermined pressure as the piston 17 moves from the bottom dead center position to the top dead center position. Then, the refrigerant gas is discharged into the discharge chamber 22 through a discharge port 25 and a discharge valve 26, which are formed in the valve plate 19.

[Displacement Control Mechanism of Compressor]

As shown in Fig. 1, a bleeding passage 27 and a gas supplying passage 28 are provided in the housing 11. The bleeding passage 27 connects the crank chamber 12 to the suction chamber 21. The gas supplying passage 28 connects the discharge chamber 22 to the crank chamber 12. A control valve CV is arranged in the gas supplying passage 28 in the housing 11.

An opening amount of the control valve CV is varied to adjust the amount of high pressure discharge gas sent into the crank chamber 12 through the gas supplying passage 28 and gas is sent out from crank chamber 12 through the bleeding passage 27. In other words, the control valve CV controls the balance between the gas amount sent into the crank chamber 12 and the gas amount sent out from the crank chamber 12 to determine the pressure of the crank chamber 12. The pressure of the crank chamber 12 is changed to adjust the difference between the pressure of the crank chamber 12 and the pressure of the compression chambers 20, which act on the pistons 17. This changes the inclination of the swash plate 15, alters the stroke of the pistons 17, and varies the displacement of the compressor CP.

For example, when the pressure of the crank chamber 12 decreases, the inclination of the swash plate 15 increases, and the displacement of the compressor CP increases. when the pressure of the crank chamber 12 increases and the inclination of the swash plate 15 decreases, the displacement of the compressor CP decreases.

[Refrigerant Circuit]

Referring to Fig. 1, a refrigerant circuit (refrigerating cycle) of the vehicle air conditioner is formed by the compressor CP and an external refrigerant circuit 30. The external refrigerant circuit 30 includes a condenser 31, an expansion valve 32, and an evaporator 33.

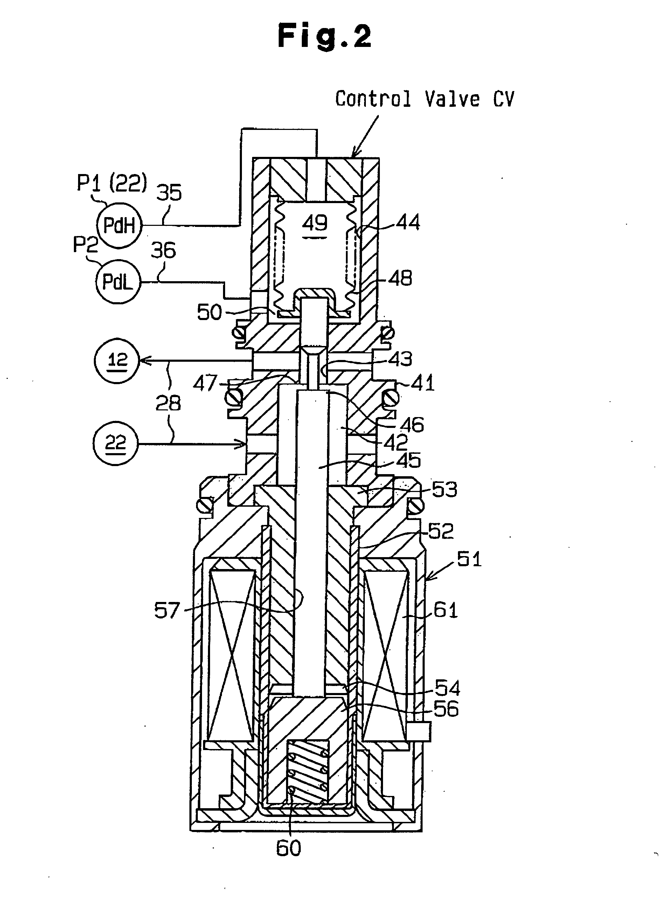

A first pressure monitoring point P1 is defined in the discharge chamber 22. A second pressure monitoring point P2 is defined in the refrigerant circuit between the first pressure monitoring point P1 and the condenser 31. A fixed restriction valve 34 is arranged between the first and second pressure monitoring points P1, P2. A first pressure detection passage 35 connects the first pressure monitoring point P1 to the control valve CV. A second pressure detection passage 36 (Fig. 2) connects the second pressure monitoring point P2 to the control valve CV.

[Control Valve]

As shown in Fig. 2, the control valve Cv has a valve housing 41 in which a valve chamber 42, a communication passage 43, and a pressure sensing chamber 44 are defined. A rod 45, which is movable in its axial direction, is arranged in the valve chamber 42 and the communication passage 43. The top portion of the rod 45, which is inserted in the communication passage 43, disconnects the communication passage 43 from the pressure sensing chamber 44. The valve chamber 42 is connected to the discharge chamber 22 by the gas supplying passage 28. The communication passage 43 is connected to the crank chamber 12 by the gas supplying passage 28. The valve chamber 42 and the communication passage 43 form part of the gas supplying passage 28.

A valve body 46, which is defined on the middle portion of the rod 45, is arranged in the valve chamber 42. A valve seat 47 is defined at the boundary between the valve chamber 42 and the communication passage 43. The communication passage 43 functions as a valve hole. When the rod 45 moves upward from the state shown in Fig. 2 (lowermost position) to an uppermost position at which the valve body 46 is received by the valve seat 47, the communication passage 43 is closed. In other words, the valve body 46 of the rod 45 functions to adjust the opened amount of the gas supplying passage 28.

A pressure sensing member, or bellows 48, is accommodated in the pressure sensing chamber 44. The top of the bellows 48 is fixed to the valve housing 41. The bottom (movable end) of the bellows 48 is fixed to the top portion of the rod 45. In the pressure sensing chamber 44, the internal space of the bellows 48 defines a first pressure chamber 49 and the external space of the bellows 48 defines a second pressure chamber 50. The pressure PdH at the first pressure monitoring point P1 is communicated to the first pressure chamber 49 via the first pressure detection passage 35. The pressure PdL at the second pressure monitoring point P2 is communicated to the second pressure chamber 50 via the second pressure detection passage 36. The bellows 48 and the pressure sensing chamber 44 define a pressure difference detecting mechanism.

An electromagnetic actuator (pressure difference adjusting actuator) 51 is arranged in the lower portion of the valve housing 41. A cylindrical sleeve 52, which has a closed bottom, extends through the center of the electromagnetic actuator 51. A fixed core 53 is fitted in the sleeve 52. A plunger chamber 54 is defined in the sleeve 52 below the fixed core 53.

A plunger (movable core) 56 is retained in the plunger chamber 54. A guide bore 57 extends axially through the center of the fixed core 53. The lower portion of the rod 45, which is axially movable, is arranged in the guide bore 57. The bottom end of the rod 45 is located in the plunger chamber 54.

A plunger spring 60 is retained in the plunger chamber 54 to urge the plunger 56 toward the fixed core 53. The elastic force of the bellows 48 urges the rod 45 toward the plunger 56. Accordingly, the upward urging force of the plunger spring 60 and the downward urging force resulting from the elasticity of the bellows 48 causes engagement between the rod 45 and the plunger 56. As a result, the plunger 56 and the rod 45 always move upward and downward integrally.

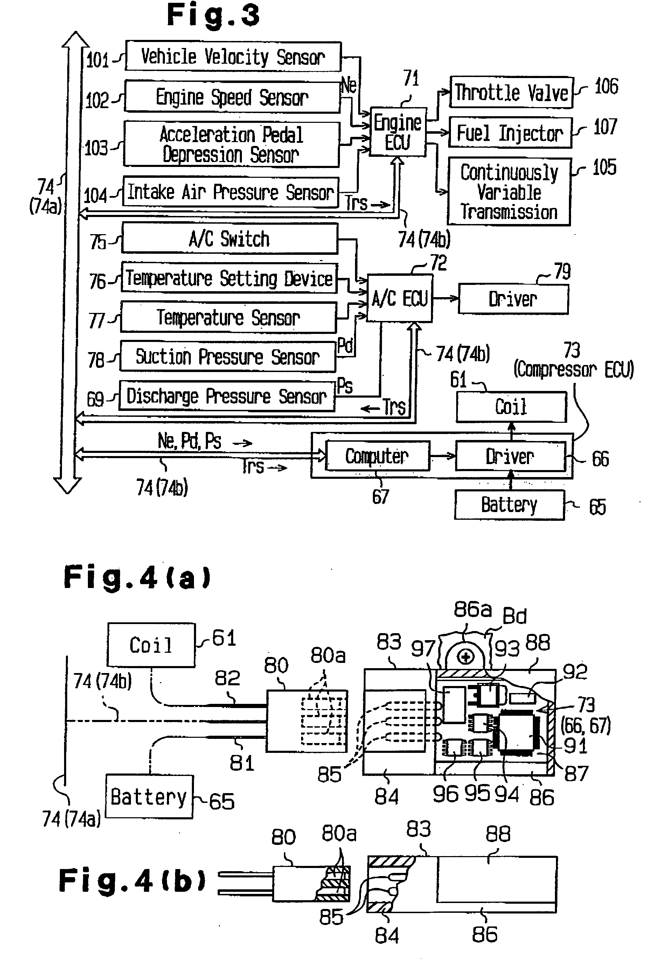

A coil 61 is wound around the fixed core 53 and the plunger 56 on the peripheral surface of the sleeve 52. In the compressor ECU 73 (Fig. 3), a computer 67 instructs a driver 66 to send a drive signal to the coil 61. This supplies the coil 61 with current from a battery (electric power source) 65. The coil 61 generates an electromagnetic force between the fixed core 53 and the plunger 56 in accordance with the amount of the supplied current.

The computer 67 of the compressor ECU 73 sends an instruction signal,'or supplies the coil 61 with a current by means of the driver 66, in accordance with a torque setting signal, which is generated by an external instruction device. The voltage applied to the coil 61 is adjusted to control the amount of current supplied to the coil 61. Pulse width control (pulse width modulation) is executed to adjust the applied voltage.

[Functional Characteristic of Control Valve]

The positioning of the rod 45 (valve body 46) in the control valve CV will now be discussed.

As shown in the state of Fig. 2, when the coil 61 is not supplied with current (duty ratio = 0%), the dominant force in the control valve CV is the downward urging force of the bellows 48. Thus, the rod 45 is arranged at its lowermost position, and the valve body 46 completely opens the communication passage 43. As a result, the pressure of the crank chamber 12 is increased to the highest value possible under the present conditions. This increases the difference between the pressure of the crank chamber 12 and the pressure of the compression chambers 20 acting on the pistons 17. In this state, the swash plate 15 is arranged at a minimum inclination position, and the displacement of the compressor CP is minimal.

The duty ratio is variable within a predetermined range. When the coil 61 of the control valve CV is supplied with current at the minimum duty ratio (>0%) or greater, an upward urging force is added to the force of the plunger spring 60. Thus, the upward urging force overcomes the downward urging force of the bellows 48 and moves the rod 45 upward. In this state, the upward urging force, which is added to the force of the plunger spring 60, counters the downward urging force that is produced by the pressure difference $\Delta Pd$ between the first and second pressure monitoring points (PdH-PdL) and added to the force of the bellows 48. The valve body 46 of the rod 45 is positioned relative to the valve seat 47 at a location where the upper and lower urging forces are balanced.

For example, when the engine speed decreases and the flow rate of the refrigerant in the refrigerant circuit decreases, the downward urging force produced by the pressure difference $\Delta Pd$ decreases. This upsets the balance between the upward and downward urging forces that was obtained by the upward urging force resulting from the electromagnetic force. Accordingly, the rod 45 (valve body 46) moves upward, decreases the opened amount of the communication passage 43, and decreases the pressure of the crank chamber 12. This moves the swash plate 15 toward a maximum inclination position and increases the displacement of the compressor CP. The increase in the displacement of the compressor CP increases the flow rate of the refrigerant in the refrigerant circuit. As a result, the pressure difference $\Delta Pd$ increases.

On the other hand, when the engine speed increases, the flow rate of the refrigerant in the refrigerant circuit increases the downward urging force produced by the pressure difference $\Delta Pd$. This upsets the balance between the upward and downward urging forces that was obtained with the upward urging force resulting from the electromagnetic force. Accordingly, the rod 45 (valve body 46) moves downward, increases the opened amount of the communication passage 43, and increases the pressure of the crank chamber 12. This moves the swash plate 15 toward the minimum inclination position and decreases the displacement of the compressor CP. The decrease in the displacement of the compressor CP decreases the flow rate of the refrigerant in the refrigerant circuit. As a result, the pressure difference $\Delta Pd$ decreases.

Further, for example, when the duty ratio Dt of the coil 61 is increased to increase the upward urging force resulting from the electromagnetic force, this upsets the balance between the upward and downward urging forces that was obtained with the force produced in accordance with the pressure difference $\Delta Pd$. Thus, the rod 45 (valve body 46) moves upward, decreases the opened amount of the communication passage 43, and increases the displacement of the compressor CP. As a result, the flow rate of the refrigerant in the refrigerant circuit increases. This increases the pressure difference ΔPd.

When the duty ratio of the coil 61 is decreased to decrease the upward biasing force resulting from the electromagnetic force, this upsets the balance between the upward and downward urging forces that was obtained with the force produced in accordance with the pressure difference ΔPd. Thus, the rod 45 (valve body 46) moves downward, increases the opened amount of the communication passage 43, and decreases the displacement of the compressor CP. As a result, the flow rate of the refrigerant in the refrigerant circuit decreases. This decreases the pressure difference ΔPd.

Accordingly, the control valve CV automatically positions the rod 45 (valve body 46) when the pressure difference ΔPd fluctuates in order to maintain the pressure difference ΔPd at its target value (target pressure difference), which is determined by the duty ratio of the coil 61. The target pressure difference may be adjusted by an external device that controls the duty ratio of the coil 61.

[Control System]

As shown in Fig. 3, an engine electronic control unit (ECU) 71, which controls the output of the engine Eg, an air conditioning (A/C) ECU 72, which controls air conditioning control elements other than the control valve CV, and a compressor ECU 73, which controls the control valve CV, are installed in the vehicle. Each of the ECUs 71-73 is a computer-like electronic control unit provided with a CPU, a ROM, a RAM, and an input/output (I/O) device. As described above, the compressor ECU 73 includes the computer 67, which functions as a compressor computer, and the driver 66, which functions as a drive circuit.

A linear bus 74 (main line 74a and branch line 74b), which functions as a signal line, connects the ECUs 71-73 to each other and enables communication between the ECUs 71-73. Standards for such local area network of a vehicle include CAN and RS-485. In the preferred embodiment, CAN is employed.

The I/O device of the ECU 71 has an input terminal connected to a vehicle velocity sensor 101, which detects the traveling velocity of the vehicle, an engine speed sensor 102, which detects the speed Ne of the engine Eg, an acceleration pedal depression sensor 103, which detects the depressed amount of the acceleration pedal (not shown), and an intake air pressure sensor 104, which detects the intake air pressure of the engine Eg. The I/O device of the engine ECU 71 has an output terminal connected to a continuously variable transmission 105, a throttle valve 106, and a fuel injector 107.

The I/O device of the A/C ECU 72 has an input terminal connected to an A/C switch 75, a temperature setting device 76, a temperature sensor 77, a suction pressure sensor 69, and a discharge pressure sensor 78. The A/C switch 75 is a switch operated by a passenger of the vehicle to activate or deactivate the air conditioner. The temperature setting device 76 is operated by the vehicle passenger to set a desired temperature. The temperature sensor 77 detects the temperature of the passenger compartment. The suction pressure sensor 69 detects the suction pressure Ps of the compressor CP. The discharge pressure sensor 78 detects the discharge pressure Pd of the compressor CP.

To maintain the temperature of the passenger compartment at the temperature set by the temperature setting device 76, the A/C ECU 72 adjusts the air current temperature, air current amount, and air current pattern of the air conditioner by outputting a control command to an associated driver 79. The driver 79 includes a servomotor, which drives an exterior/interior air switching door, a blower motor, and an air mix door driving servomotor. In addition to the control valve CV, the driver 79 serves as an air conditioning control element.

Referring to Figs. 4A and 4B, the branch line 74b of the linear bus 74 is connected to the compressor ECU 73. A female connector 80 is connected to the terminal end of the branch line 74b. A battery power line 81, which leads to a battery 65, and a coil power line, which leads to the coil 61 of the control valve CV, are connected to the female connector 80. A male connector 83, which is detachably fitted to the female connector 80, includes a synthetic resin fitting portion 84, into which the female connector 80 is fitted, and male terminals 85, which are fitted in female terminals 80a of the female connector 80. The male connector 83 incorporates the compressor ECU 73, or the computer 67 and the driver 66.

A plate-like base 86 extends integrally from the fitting portion 84 of the male connector 83. Electric devices 91-97, which define the compressor ECU 73, and a substrate 87, to which the male terminals 85 are connected, are fixed on the base 86. A cover 88 is attached to the base 86 to cover the substrate 87. Thus, the entire male connector 83 serves as a case for accommodating the compressor ECU 73.

The male connector 83 has a tab 86a, which extends from the side of the base 86. A fastener such as a bolt is inserted through the tab 86a and fastened to a vehicle body Bd to fix the male connector 83 to the body Bd. It is preferred that the male connector 83 (compressor ECU 73) be arranged in the passenger compartment, the trunk, or a relatively cool area, which is separated from equipment that become hot in the engine room, such as the compressor CP and the engine Eg.

Referring to Fig. 4A, the computer 67 includes a CPU 91, which incorporates a ROM and a RAM, an oscillator 92, a constant voltage IC 93. The driver 66 includes a MOS-FET 94 and an OP amp 95. A CAN driver 96 and a diode 97, which protects the circuit when the male connector 83 is reversely connected to the female connector 80, are also arranged on the substrate 87. A resin mold is formed on the substrate 87 to improve the water resistance, heat resistance, vibration resistance, and electric insulation of the electric devices 91-96.

The compressor ECU 73 assigns the various types of information (Ne, Ps, Pd) received from the engine ECU 71 and the A/C ECU 72 in an equation (equation 1), which is prestored, to calculate the target pressure difference (instructed duty ratio Dt). The target pressure difference, or functional state of the control valve CV, corresponds to the discharge gas flow rate Qd to adjust the load torque Tr of the drive shaft 13 in the compressor CP to a target torque Trs provided from an external instruction device. The compressor ECU 73 sends an instruction signal to the control valve CV to obtain the target pressure difference.

The load torque Tr of the compressor CP that acts on the drive shaft 13 is represented by equation 1. The variables of equation 1 are the pressures of the compressor CP that affect the load torque Tr (i.e., suction pressure Ps and discharge pressure Pd), the rotating speed Nc of the drive shaft 13, and the discharge gas flow rate Qd.

**Equation 1**

$$Tr = \frac{60}{2\pi \times Nc} \times \left[\frac{n}{n-1} Pd \times Qd \times \left\{1 - \left(\frac{Pd}{Ps}\right)^{\frac{1-n}{n}}\right\}\right] + Tloss$$

In the equation, Tr represents the load torque, Tloss represents the loss torque, n represents the ratio of specific heat (1.03 for R134a), Nc represents the drive shaft rotating speed (rpm), Qd represents the gas flow rate of discharge gas, Ps represents the suction pressure, and Pd represents the discharge pressure.

Further, Qd is obtained from the following equation.

$$Qd = (flow\ rate\ coefficient) \times (fixed\ restriction\ valve\ (34)\ area) \times \sqrt{2\Delta Pd/\rho d}$$

The rotating speed Nc of the drive shaft 13 is determined by the engine speed Ne and the gear ratio of the power transmission mechanism PT which are prestored. The pressure difference ΔPd is determined by an input current value of the coil 61 of the control valve CV, or the function of the duty ratio Dt, and the specific gravity ρd of the discharge gas may be approximated with the discharge gas pressure Pd. Further, the loss torque Tloss of equation 1 is determined by the structure of the compressor CP.

The A/C ECU 72 calculates the required discharge amount of the compressor CP (the amount of refrigerant required to be discharged from the compressor CP to the external refrigerant circuit 30 per unit time), or the required discharge gas flow rate, based on the ON/OFF state of the A/C switch 75, the temperature set by the temperature setting device 76, and the temperature detected by the temperature sensor 77. Further, the A/C ECU 72 calculates the load torque Tr of the compressor CP in correspondence with the required discharge amount of the compressor CP.

The engine ECU 71 provides the A/C ECU 72 with information indicating whether or not the vehicle is in an abnormal state, or abnormal driving mode. The abnormal driving mode refers to, for example, a state in which a large load is applied to the engine Eg such as when climbing a slope, a state in which the vehicle is being accelerated (at least when the driver suddenly accelerates the vehicle), or a state in which the engine Eg is being started. When receiving a signal from the engine ECU 71 indicating that the vehicle is in the abnormal driving mode, the A/C ECU 72 sends a signal to the compressor ECU 73 (computer 67) and instructs the compressor ECU 73 to set the minimum torque value as the target torque Trs. When such signal is not received, the A/C ECU 72 instructs the compressor ECU 73 (computer 67) to set the target torque Trs in accordance with the required discharge amount. In the preferred embodiment, the A/C ECU 72 functions as the external instruction device that outputs a torque setting signal to the compressor ECU 73.

The operation of the above controller will now be discussed.

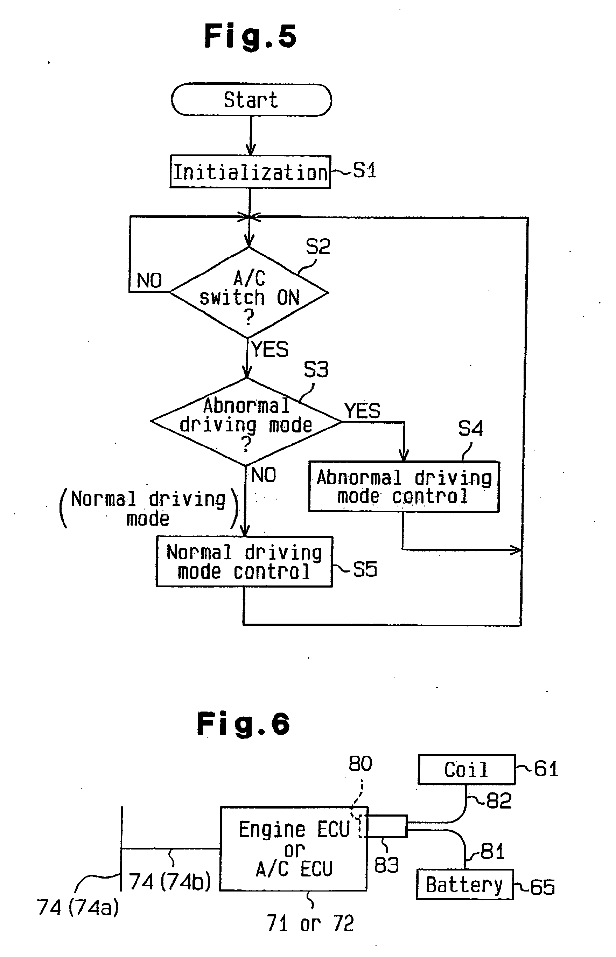

The flowchart of Fig. 5 illustrates a main routine of an air conditioning control program. The A/C ECU 72 starts to process the routine when an ignition switch (start switch) of the vehicle is turned on. In step S1, the A/C ECU 72 performs various initializations. Then, the A/C ECU 72 proceeds to step S2.

In step S2, the state of the A/C switch 75 is monitored until the A/C switch 75 is turned on. When the A/C switch 75 is turned on, the A/C ECU 72 proceeds to step S3. In step S3, the A/C ECU 72 determines whether or not the vehicle is in the abnormal driving mode based on signals sent from the engine ECU 71.

When the vehicle is in the abnormal driving mode, the A/C ECU 72 proceeds to step S4 to perform an abnormal state control. In the abnormal driving mode, the A/C ECU 72 instructs the compressor ECU 73 to set the minimum torque value as the target torque Trs.

In step S3, if the vehicle is not in the abnormal driving mode, the A/C ECU 72 proceeds to step S5 to perform normal control. During the normal control, the A/C ECU 72 calculates the required discharge amount of the compressor CP based on the temperature set by the temperature setting device 76 and the temperature detected by the temperature sensor 77 to calculate the corresponding torque value Tr of the compressor CP. The A/C ECU 72 sets the calculated torque value Tr as the target torque Trs and provides the engine ECU 71 with the signal of the target torque Trs.

The computer 67 of the compressor ECU 73 calculates the target pressure difference ΔPd of the control valve that corresponds to the discharge gas flow rate Qd associated with the signal of the target torque Trs, which is sent from the A/C ECU 72. Further, the computer 67 calculates the duty ratio Dt of the current supplied to the coil 61 of the control valve that is optimal for achieving the target pressure difference ΔPd. The compressor ECU 73 then instructs the driver 66 to output current in accordance with the calculated duty ratio Dt. This adjusts the target pressure difference of the control valve CV to an optimal value and operates the compressor CP at the target torque Trs.

The engine ECU 71 calculates the target engine output torque Trk from the acceleration pedal depression amount, which is detected by the acceleration pedal depression sensor 103, the engine speed Ne, which is detected by the engine speed sensor 102, and the signal of the target torque Trs of the compressor CP input by the A/C ECU 72. The engine ECU 71 controls the engine Eg to obtain the calculated target engine output torque Trk.

In accordance with the calculated target output torque Trk, the engine ECU 71 determines the target throttle opening degree and sends the target throttle opening degree to the throttle valve 106. The throttle valve 106 adjusts the opening of the throttle valve (not shown) to achieve the target throttle opening degree. This adjusts the intake air amount of the engine Eg.

The engine ECU 71 calculates a target fuel injection amount based on the intake air pressure information, which is sent from the intake air pressure sensor 104, and the stoichiometric air fuel ratio. The fuel injector 107 injects the fuel amount that corresponds to the target fuel injection amount into the combustions chambers of the engine Eg during the intake strokes.

The engine ECU 71 determines the target value of the engine speed Ne based on the output torque Trk. The engine ECU 71 then obtains a target gear ratio from the target value of the engine speed Ne and the vehicle velocity, which is detected by the vehicle velocity sensor 101 and sends the target gear ration to the continuously variable transmission 105. The continuously variable transmission 105 adjusts, for example, the pulley ratio (effective diameter ratio) of a drive pulley and a driven pulley to obtain the target transmission gear ratio. This adjusts the engine speed Ne to the target value. As a result, the engine Eg is driven so that the engine output torque Trk and the engine speed Ne optimize fuel consumption.

The advantages of the first embodiment will now be discussed.

(1) The compressor ECU 73 controls the compressor CP in accordance with the target torque Trs, which is determined by the A/C ECU 72. Accordingly, when the engine ECU 71 controls the engine Eg in accordance with the torque data of the compressor CP, the engine ECU 71 does not use a map to presume the load torque Tr of the compressor and uses the torque data sent from the A/C ECU 72 as the target torque Trs. This facilitates the control of the engine Eg. Further, a map for presuming the load torque of the compressor does not have to be prepared for each type of vehicle (i.e., each type of air conditioner). Thus, the compressor CP is easily adapted to any type of vehicle.

(2) The compressor ECU 73 calculates the target pressure difference of the control valve CV based on equation 1, which is used to calculate the load torque Tr using the discharge pressure Pd of the compressor CP, rotating speed Nc of the drive shaft 13, and the discharge gas flow rate Qd as variables. The current supplied to the control valve CV is controlled to achieve the target pressure difference. Thus, the load torque Tr is accurately presumed even if the structure of the external refrigerant circuit 30 of the air conditioner changes.

(3) The control valve CV incorporates a pressure difference detecting mechanism (bellows 48), which mechanically detects the pressure difference ΔPd on each side of the fixed restriction valve 34. The control valve CV automatically adjusts its opened amount in accordance with the pressure difference ΔPd detected by the pressure difference detecting mechanism. Further, the target pressure difference, which serves as an index for the automatic valve opened amount adjustment, is controlled in accordance with the amount of current supplied to the electromagnetic actuator 51 (coil 61). Accordingly, in the compressor ECU 73, the computer 67 easily recognizes the discharge gas flow rate Qd from the instruction signal of the driver 66. Thus, the load torque Tr is accurately presumed even if a sensor for detecting the flow rate Qd is not detected.

(4) The A/C ECU 72 also functions as an external instruction device, which sends the target torque Trs to the compressor ECU 73. Accordingly, space does not have to be provided for the external instruction device.

(5) A signal associated with torque is used to control the compressor CP. Accordingly, signals from the engine ECU 71 and the compressor ECU 73 do not have to be converted into a torque value. This facilitates the control of the engine Eg and the compressor CP.

(6) The computer 67 of the compressor ECU 73 is separated from the compressor CP, which tends to become hot. Accordingly, the computer 67 is hardly affected by the heat of the compressor CP. This improves the reliability of calculation processes even if special heat resistance elements or heat insulation elements are not provided.

(7) The computer 67 of the compressor ECU 73 is incorporated in the connector 83, which is connected to the branch line 74b of the linear bus 74. This saves space in comparison to when the computer 67 is accommodated in another case.

(8) The driver 66 of the compressor ECU 73 is incorporated in the connector 83 together with the computer 67. This saves space in comparison to when only the driver 66 is accommodated in another case.

In the prior art, the control valve CV is controlled by the engine ECU 71 and the A/C ECU 72. However, in the first embodiment, the compressor ECU 73 is employed to exclusively control the control valve CV and achieve the target torque Trs, which is set by an external device. Accordingly, the compressor ECU 73 is compact. This facilitates the incorporation of the compressor ECU 73 in the connector 83.

(9) In the compressor ECU 73, the electric devices 91-93 that configure the computer 67 and the electric devices 94, 95 that configure the driver 66 are connected to the same substrate 87. Accordingly, the printing of the substrate 87 and the binding of the electric devices 91-97 to the substrate 87 are performed during the same operation. This eliminates the need for a signal transmission line that connects the computer 67 and the driver 66.

(10) The connectors 80, 83 enable the power line 81, which extends from the battery 65 to the driver 66, and the power line 82, which extends from the driver 66 to the coil 61 of the control valve CV, to be connected to the branch line 74b of the linear bus 74 simultaneously with the computer 67 of the compressor ECU 73. Accordingly, when the vehicle is assembled, the driver 66 and the computer 67 are easily wired.

(11) The local area network, which includes the linear bus 74, connects the ECUs 71-73 to each other and enables communication between the ECUs 71-73. Accordingly, this facilitates the sharing of information between the ECUs 71-73.

Second Embodiment

A second embodiment will now be discussed with reference to Fig. 6. In the second embodiment, the female connector 80 is incorporated in the engine ECU 71 or the A/C ECU 72. The female terminals 80a (Fig. 4A) of the connector 80 are connected to the branch line 74b of the linear bus 74 via the ECU 71 or the ECU 72. The male connector 83 (male terminals 85), which incorporates the compressor ECU 73, is fitted in the female connector 80 (female terminals 80a). This connects the branch line 74b of the linear bus 74 to the compressor ECU 73.

The power line 81, which connects the battery 65 to the driver 66 of the compressor ECU 73, and the power line 82, which connects the driver 66 to the coil 61 of the control valve CV, extend directly from the substrate 87 and out of the male connector 83.

In addition to advantages (1) to (9) and (11) of the first embodiment, the second embodiment has the following advantage. The compressor ECU 73 is connected to the linear bus 74 via the engine ECU 71 or the A/C ECU 72. Accordingly, a branch line 74b used exclusively for the compressor ECU 73 is not necessary. This simplifies the configuration of the network (linear bus 74) in the vehicle. Further, since the engine ECU 71 or the A/C ECU 72 supports the compressor ECU 73, there is no need to provide exclusive space on the vehicle body Bd for the compressor ECU 73.

It should be apparent to those skilled in the art that the present invention may be embodied in many other specific forms. Particularly, it should be understood that the present invention may be embodied in the following forms.

In the above embodiments, the ECUs 71-73 are connected to each other by the same communication line (linear bus 74). However, different communication lines may be connected to each of the ECUs 71-73. This would prevent delays in the transmission of information caused by traffic in the common line and increase the accuracy for controlling the engine Eg, the compressor CP, and the like.

Instead of calculating the value of the target torque Trs from the beginning whenever the A/C ECU 72 sends the signal of the target torque Trs to the compressor ECU 73, the previous target torque Trs may be stored. In this case, a predetermined value is added to or subtracted from the stored value. The resulting value is then sent to the compressor ECU 73 as the target torque Trs. When the displacement of the compressor CP is insufficient, a predetermined value is added to the previous target torque Trs to renew the target torque Trs. When the displacement of the compressor CP is excessive, a predetermined value is subtracted from the previous target torque Trs to renew the target torque Trs. This simplifies the calculation of the target torque Trs.

The A/C ECU 72 may be eliminated and the engine ECU 71 may include the functions of the engine ECU 71. In this case, the engine ECU 71 serves as the external instruction device, and the compressor ECU 73 controls the control valve CV in accordance with the target torque Trs determined by the engine ECU 71. This simplifies the configuration of the network that transmits signals to control the air conditioner.

The target torque Trs, which is sent to the compressor ECU 73, does not have to be calculated with a CPU based on conditions such as the target temperature and the passenger compartment temperature. For example, when a manual air conditioner is employed, the target torque Trs may be varied in accordance with the operations of knobs, which set the cooling conditions, in a step-like or continuous manner. The signal based on target torque Trs, which is sent to the compressor ECU 73, may also be sent to the engine ECU 71. The engine ECU 71 uses the target torque Trs to calculate the target engine output torque Trk.

During the abnormal driving mode, the engine ECU 71 instructs the compressor ECU 73 to use a predetermined value as the target torque Trs. This enables the engine ECU 71 to efficiently control the engine Eg in accordance with the operating conditions of the compressor CP.

The engine ECU 71 may function to determine the target torque Trs. The engine ECU 71 calculates the torque that is required in accordance with the present conditions of the vehicle. Then, based on the value of the torque required for the compressor CP, which is calculated by the A/C ECU 72, the engine ECU 71 determines the target torque Trs of the compressor CP giving priority to the vehicle conditions. The engine ECU 71 then instructs the compressor ECU 73 of the target torque Trs. Even if the vehicle is in the abnormal driving mode, such as when the vehicle is accelerating or climbing a slope, the engine ECU 71 does not necessarily have to operate the compressor CP in the minimal displacement state. Thus, if there is a surplus margin, the maximum torque within the surplus margin may be set as the target torque of the compressor CP. This would give priority to the driving state of the vehicle and efficiently operate the air conditioner.

An external instruction device (computer) for determining the target torque Trs may be provided in the compressor ECU 73 to determine whether to give priority to the engine ECU 71 or the A/C ECU 72 with regard to the torque required by the compressor CP.

The compressor ECU 73 may be provided with a sensor for detecting various pressures related with the compressor CP (e.g., suction pressure Ps and discharge pressure Pd) and a sensor for detecting the rotating speed Nc of the drive shaft 13.

A torque sensor may be provided to detect the load torque Tr of the compressor CP, and the compressor ECU 73 may control the displacement of the compressor CP so that the detected torque Tr matches the target torque Trs. This eliminates the need to calculate the load torque Tr and decreases the calculation load applied to the compressor ECU 73. Further, the suction pressure sensor 69 and the discharge pressure sensor 78 may be eliminated.

In the above embodiments, the connector 83 (terminals 85) may be a female connector and the connector 80 (terminals 80a) may be a male connector.

Instead of connecting both power lines 81, 82 to the branch line 74b of the linear bus 74, one of the two lines 81, 82 may be connected to the branch line 74b and the other one of the two lines may be directly connected to the substrate 87.

In the first embodiment, the connectors 80, 83 may be eliminated, and the lines 74b, 81, and 82 may directly be connected to the substrate 87.

The compressor ECU 73 may be removed from the connector 83. For example, the circuit substrate 87 and the electric devices 91-97 of the compressor ECU 73 may be accommodated in exclusive cases, the case accommodating the circuit substrate of the engine ECU 71, or the case accommodating the circuit substrate of the A/C ECU 72. The engine ECU 71 and the A/C ECU 72 are normally arranged in a relatively cool area such as the passenger compartment.

In the compressor ECU 73, the computer 67 may be incorporated in the connector 83 and the driver 66 may be installed at a different location. In this case, the circuit substrate of the driver 66 may be accommodated in an exclusive case and fixed to the vehicle body Bd. The circuit substrate of the driver 66 may also be accommodated in a case accommodating the circuit substrate of the engine ECU 71 or in a case accommodating the circuit substrate of the A/C ECU 72. Alternatively, the driver 66 may be incorporated in the housing 11 of the compressor CP or the valve housing 41 of the control valve CV.

The communication passage 43 may be connected to the discharge chamber 22 by the upstream portion of the gas supplying passage 28, and the valve chamber 42 may be connected to the crank chamber 12 by the downstream portion of the gas supplying passage 28. In other words, the upstream and downstream relationship between the valve chamber 42 and the communication passage 43 in the gas supplying passage 28 may be reversed from that of the above embodiments. This would decrease the pressure difference between the communication passage 43 (atmosphere of discharge pressure Pd) and the second pressure chamber 50 (atmosphere of discharge pressure Pd), which is adjacent to the communication passage 43. Further, pressure leakage would be suppressed, and the displacement would be controlled with high accuracy.

The control valve CV may be configured to adjust the pressure of the crank chamber 12 by adjusting the opened amount of the bleeding passage 27.

The control valve CV may be an electromagnetic valve that does not have an automatic valve opening adjustment function.

The present examples and embodiments are to be considered as illustrative and not restrictive.

A controller for controlling the displacement of a variable displacement compressor (CP) that does not require an engine ECU to presume the load torque of the compressor and thus does not require the preparation of a load torque presumption map for each type of vehicle. The displacement controller includes a control valve (CV) arranged in the compressor to vary the displacement of the compressor in accordance with an instruction signal. A first computer (67) is connected to the control valve. The first computer provides the instruction signal to the control valve to adjust a torque (Tr) of the compressor to a target torque that is in accordance with a torque target signal (Trs).

**Claims**

1. A displacement controller for controlling displacement of a variable displacement compressor (CP), wherein the compressor includes a drive shaft (13), which is provided with power from a drive source (Eg), and a variable displacement mechanism (14,15), the drive shaft being rotated to perform suction, compression, and discharge of gas, the displacement controller including a control valve (CV) arranged in the compressor to vary the displacement of the compressor in accordance with an instruction signal, the displacement controller **characterized by** a first computer (67) connected to the control valve, wherein the first computer provides the instruction signal to the control valve to adjust a torque (Tr) of the compressor to a target torque that is in accordance with a torque target signal (Trs).

2. The displacement controller according to claim 1, further comprising a connector (83) selectively connected to a signal line (74b) for providing the target torque signal, wherein the first computer is incorporated in the connector.

3. The displacement controller according to claim 2, wherein the control valve includes an electromagnetic actuator (51), the displacement controller further comprising a drive circuit (66) connected to the electromagnetic actuator and the first computer to receive the instruction signal and provide the electromagnetic actuator with a drive signal, wherein the drive circuit and the first computer are both incorporated in the connector.

4. The displacement controller according to claim 3, wherein the connector is selectively connected to a power line of the drive circuit and/or a power line extending from the drive circuit to the electromagnetic actuator.

5. The displacement controller according to one of claims 2 to 4, wherein the connector includes a fitting portion (84), a base (86) formed integrally with the fitting portion, and a substrate (87) on which the first computer is arranged.

6. The displacement controller according to claim 5, wherein the connector includes a cover (88) arranged on the base to cover the substrate.

7. The displacement controller according to claim 5 or 6, wherein the first computer and the drive circuit include electric devices (91-96) mounted on the substrate.

8. The displacement controller according to one of claims 1 to 7, wherein the first computer is separated from the variable displacement compressor.

9. The displacement controller according to one of claims 1 to 7, wherein the first computer is exclusive to the variable displacement compressor.

10. The displacement controller according to one of claims 1 to 7, further comprising:

a second computer (72) used in an air conditioner to generate the torque target signal, wherein the second computer is connected to the first computer via a local area network (74).

11. The displacement controller according to claim 10, wherein the second computer generates the torque target signal and controls the air conditioner.

12. The displacement controller according to one of claims 1 to 7, wherein the first computer calculates an opened amount of the control valve based on a discharge pressure (Pd) of the compressor, a rotating speed (Nc) of the drive shaft, and the discharge gas flow rate (Qd), and generates an instruction signal representing the calculated opened amount to adjust the torque of the compressor to the target torque, which is in accordance with the target torque signal.

13. The displacement controller according to one of claims 1 to 7, wherein the compressor is used in an air conditioner, and the air conditioner includes a refrigerant circuit (30) connected to the compressor, the control valve including:

a pressure difference detecting means for detecting a pressure difference between two pressure monitoring points (P1, P2) defined in the refrigerant circuit;
a pressure difference altering means (44, 48) for altering the pressure difference based on the detected pressure difference and the instruction signal from the first computer.

14. The displacement controller according to one of claims 1 to 7, wherein the compressor is used in a vehicle air conditioner, and the drive source is a drive source of a vehicle, the controller further comprising:

a second computer for generating the torque target signal and controlling the vehicle drive source.

15. The displacement controller according to one of claims 1 to 7, wherein the compressor includes a control chamber, the pressure of the control chamber being adjusted to vary the displacement of the compressor, and the control valve adjusts its opened amount in accordance with the instruction signal to adjust the pressure of the control chamber and vary the displacement of the compressor.

16. A vehicle air conditioner comprising:

a variable displacement compressor (CP) including a drive shaft (13), which is provided with power from a drive source (Eg), and a variable displacement mechanism (14, 15), the drive shaft being rotated to perform suction, compression, and discharge of gas; and
a displacement controller for controlling displacement of the compressor, the displacement controller including a control valve (CV) arranged in the compressor to vary the displacement of the compressor in accordance with an instruction signal, the vehicle air conditioner **characterized in that** the displacement controller includes a first computer (67) connected to the control valve, wherein the first computer provides the instruction signal to the control valve to adjust a torque (Tr) of the compressor to a target torque that is in accordance with a torque target signal (Trs).

17. A connector (83) selectively connected to a signal line (74b), which provides the torque target signal, for adjusting a torque of a variable displacement compressor, wherein the compressor includes a control valve (CV) to vary the displacement of the compressor in accordance with an instruction signal, the connector **characterized by**:

a first computer (67) for providing the instruction signal to the control valve to adjust the torque (Tr) of the compressor to a target torque that is in accordance with a torque target signal (Trs).

18. The connector according to claim 17, wherein the control valve includes an electromagnetic actuator (51), the connector further comprising a drive circuit (66) connected to the electromagnetic actuator and the first computer to receive the instruction signal and provide the electromagnetic actuator with a drive signal.

19. A variable displacement control system for controlling a variable displacement compressor (CP) including a drive shaft (13), which is provided with power from a drive source (Eg), and a variable displacement mechanism (14, 15), the drive shaft being rotated to perform suction, compression, and discharge of gas, the system includes a control valve (CV) arranged in the compressor to vary the displacement of the compressor in accordance with an instruction signal, the system **characterized by**;

a first computer (67) connected to the control valve, wherein the first computer provides the instruction signal to the control valve to adjust a torque (Tr) of the compressor to a target torque, which is in accordance with a torque target signal (Trs); and
a second computer (72) for generating the target torque signal representing the target torque of the compressor.

20. The control system according to claim 19, wherein the compressor is used in an air conditioner that sets a temperature of a passenger compartment in a vehicle and detects the temperature of the passenger compartment, and the second computer generates the target torque signal based on the set temperature and the detected temperature of the air conditioner.

21. The control system according to claim 19, wherein the compressor is used in a vehicle air conditioner, the second computer controls the air conditioner, and the drive source is a drive source (Eg) of a vehicle, the control system further comprising:

a third computer (71) connected to the second computer for controlling the vehicle drive source in accordance with the target torque signal.

22. The control system according to claim 21, wherein the third computer determines whether the vehicle is in an abnormal driving mode, and the second computer generates the target torque signal when the third computer determines that the vehicle is not in the abnormal driving mode.

23. The control system according to claim 21, wherein the third computer determines whether the vehicle is in an abnormal driving mode, and the second computer generates the target torque signal, which represents a minimum torque, when the third computer determines that the vehicle is in the abnormal driving mode.

24. The control system according to one of claims 19 to 23, wherein the first computer is separated from the variable displacement compressor.

25. The control system according to one of claims 19 to 23, wherein the first computer is exclusive to the variable displacement compressor.

# Fig.1

EP 1 270 944 A2

Power Transmission Mechanism ~PT

Engine ~Eg

Control Valve CV

# Fig.2

Control Valve CV

## Fig.3

## Fig.4(a)

## Fig.4(b)

# Fig.5

Start

Initialization —S1

S2

NO ← A/C switch ON ?

YES

S3

Abnormal driving mode ? — YES → Abnormal driving mode control — S4

NO

(Normal driving mode)

Normal driving mode control —S5

# Fig.6

80

Coil —61

Engine ECU or A/C ECU

74 (74b)

74 (74a)

83

82

81

Battery —65

71 or 72